# EUROPEAN PATENT APPLICATION

(11) **EP 4 800 750 A1**
(43) Date of publication of application: **02.09.2026**
(21) Application number: 26156434.8
(22) Date of filing: 04.02.2026
(51) Int. Cl.: H01M 4/13, H01M 4/66, H01M 10/052, H01M 10/0585, H01M 50/528, H01M 50/533, H01M 50/536

(54) **COMPOSITE SUBSTRATE, DEPOSITION-TYPE NEGATIVE ELECTRODE INCLUDING THE SAME, AND A RECHARGEABLE LITHIUM BATTERY INCLUDING THE SAME**

(30) Priority: 26.02.2025 KR 20250025077
(71) Applicant: SAMSUNG SDI CO., LTD., Yongin-si, Gyeonggi-do 17084 (KR)
(72) Inventor: KIM, Junyoung, 17084 Yongin-si (KR); KIM, Suhyun, 17084 Yongin-si (KR); LEE, Wonhyung, 17084 Yongin-si (KR); CHA, Jungwook, 17084 Yongin-si (KR); LEE, Kyuseo, 17084 Yongin-si (KR); KANG, Dayoung, 17084 Yongin-si (KR); KWON, Minseok, 17084 Yongin-si (KR); WOO, Seokho, 17084 Yongin-si (KR); YOON, Yeonhee, 17084 Yongin-si (KR); AN, Seonhyeok, 17084 Yongin-si (KR)
(74) Representative: Maiwald GmbH

(57) **Abstract**

The present disclosure relates to a composite substrate for a deposition-type negative electrode, a negative electrode including the composite substrate, and a rechargeable lithium battery including the composite substrate. The composite substrate includes an elastic layer, and a metal layer on the elastic layer. The elastic layer includes a polymer foam and a carbon-based conductive material.

## Description

### BACKGROUND

The present disclosure relates to a composite substrate and a deposition-type negative electrode, and a rechargeable lithium battery including the composite substrate and deposition-type negative electrode.

With increasing industrial demand, the development of high-energy-density and highly safe batteries is pursued. Lithium-ion batteries, for instance, are widely commercialized not only for consumer electronics and communication devices, but also in the automotive industry. In automotive applications, battery safety is relevant due to the direct impact thereof on human safety.

All-solid-state batteries, which use a solid electrolyte instead of a liquid electrolyte, are a promising alternative. Unlike conventional lithium-ion batteries that contain flammable organic solvents, all-solid-state batteries significantly reduce the risk of fire or explosion, even in the event of a short circuit. As a result, all-solid-state batteries offer a substantial improvement in safety compared to lithium-ion batteries utilizing liquid electrolytes.

### SUMMARY

Examples embodiments of the present disclosure includes a composite substrate which is desired or improved in electrical conductivity and is capable of mitigating a volume change of a deposition-type cathode.

Examples embodiments of the present disclosure include a deposition-type negative electrode having desired or improved electrical conductivity and capable of mitigating volume change due to lithium deposition.

Examples embodiments of the present disclosure include a rechargeable lithium battery that mitigates a change in the volume due to lithium deposition and has desired or improved life characteristics.

According to one example embodiment of the present disclosure, the composite substrate for a deposition-type negative electrode includes an elastic layer, and a metal layer on the elastic layer, wherein the elastic layer may include a polymer foam and a carbon-based conductive material.

According to another example embodiment of the present disclosure, a deposition-type negative electrode includes a composite substrate, and a coating layer on the composite substrate, wherein the composite substrate includes an elastic layer and a metal layer on the elastic layer, and wherein the elastic layer may include a polymer foam and a carbon-based conductive material.

According to another example embodiment of the present disclosure, a rechargeable lithium battery may include a positive electrode layer, a deposition-type negative electrode layer, and an electrolyte layer interposed between the positive electrode layer and the negative electrode layer, wherein the negative electrode layer includes a composite substrate. The composite substrate may include an elastic layer and a metal layer on the elastic layer. The elastic layer may include a polymer foam and a carbon-based conductive material.

### BRIEF DESCRIPTION OF DRAWINGS

FIG. 1 is a cross-sectional view of a rechargeable lithium battery including a deposition-type negative electrode according to one example embodiment of the present disclosure.
FIG. 2 is a cross-sectional view of a rechargeable lithium battery including a deposition-type negative electrode according to one example embodiment of the present disclosure.
FIG. 3 is a plan view of a rechargeable lithium battery including a deposition-type negative electrode according to one example embodiment of the present disclosure.
FIG. 4 is a cross-sectional view of a rechargeable lithium battery including a deposition-type negative electrode according to one example embodiment of the present disclosure.
FIG. 5 is a cross-sectional view of a rechargeable lithium battery including a deposition-type negative electrode according to one example embodiment of the present disclosure.
FIG. 6 is a cross-sectional view of a composite substrate according to one example embodiment of the present disclosure.
FIG. 7 is an enlarged view of region "M" of FIG. 6 for illustrating the elastic layer.
FIG. 8 is an exploded perspective view of a composite substrate according to one example embodiment of the present disclosure.
FIG. 9A is an exploded perspective view of a composite substrate according to another example embodiment of the present disclosure.
FIG. 9B is a cross-sectional view of the composite substrate illustrated in FIG. 9A.
FIG. 10A is a cross-sectional view of a rechargeable lithium battery unit cell according to one example embodiment of the present disclosure.
FIG. 10B is a cross-sectional view of a rechargeable lithium battery stack cell according to one example embodiment of the present disclosure.
FIGS. 11-14 are cross-sectional views for illustrating a method of manufacturing a composite substrate according to one example embodiment of the present disclosure.

### DETAILED

To fully understand the configuration and effects of the present disclosure, some example embodiments are described with reference to the accompanying drawings. However, the present disclosure is not limited to the following example embodiments, and may be implemented in various forms. The example embodiments are provided solely to illustrate the present disclosure and to enable those skilled in the art to fully understand the scope thereof.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description are only to explain various example embodiments and are not intended to limit the present disclosure. Unless explicitly stated otherwise, singular forms may also include plural forms. The terms "comprises/includes" and "comprising/including" do not exclude the presence or addition of one or more other components.

The phrases "A or B," "at least one of A and B," "at least one of A or B," "A, B, or C," "at least one of A, B, and C," and "at least one of A, B, or C" include any one or all possible combinations of the listed elements.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

In a rechargeable lithium battery including a deposition-type negative electrode, a lithium-containing metal may be deposited and dissolved on the negative electrode in a charging and discharging process. For this reason, in the rechargeable lithium battery including the deposition-type negative electrode, a lithium layer maybe formed on the negative electrode substrate after charging. The lithium layer may comprise lithium or a lithium alloy.

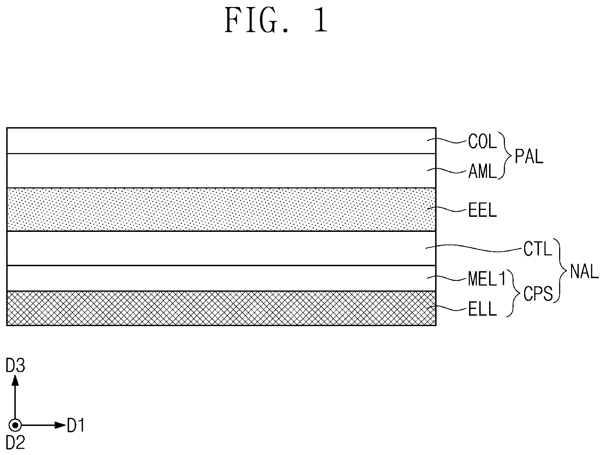

FIG. 1 is a cross-sectional view for illustrating a rechargeable lithium battery including a deposition-type negative electrode according to one example embodiment of the present disclosure. Referring to FIG. 1, a rechargeable lithium battery including a deposition-type negative electrode may include a positive electrode layer PAL, a negative electrode layer NAL, and an electrolyte layer EEL interposed between the positive electrode layer PAL and the negative electrode layer NAL. The electrolyte layer EEL may include a liquid electrolyte, a solid electrolyte, a semi-solid electrolyte, or a combination thereof.

The positive electrode layer PAL may include a positive electrode current collector COL, and a positive electrode active material layer AML on the positive electrode current collector COL.

The liquid electrolyte may be or include an organic electrolyte solution. The organic electrolytic solution may include an organic solvent and a lithium salt. The semi-solid electrolytes may include polymers in the form of gels and liquid electrolyte impregnated within the polymer. The solid electrolyte is the same as the solid electrolyte described below.

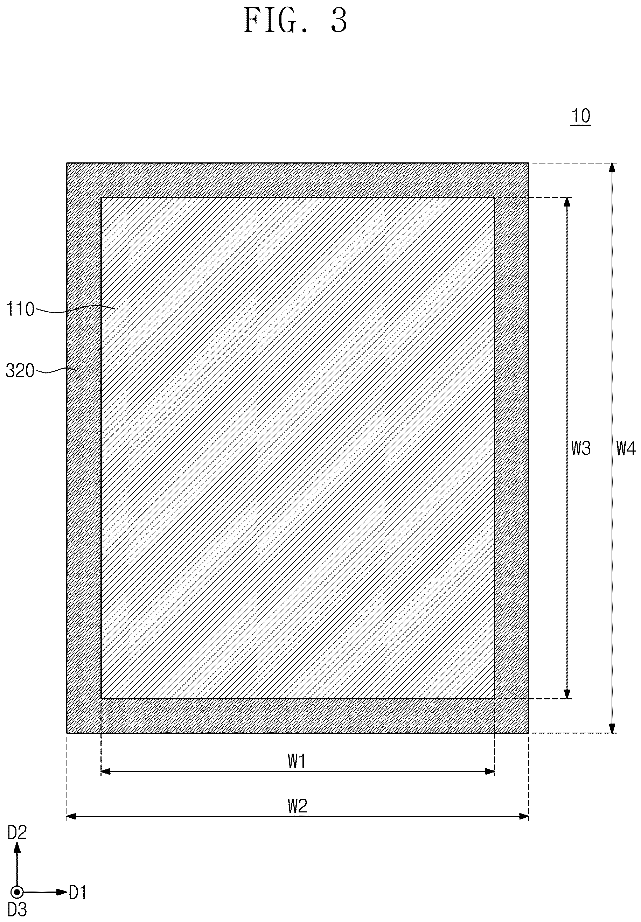

In one example embodiment, the electrolyte layer EEL may correspond to the solid electrolyte layer 300 described below with reference to FIG. 3.

The negative electrode layer NAL may include a negative electrode current collector, and a coating layer CTL on the negative electrode current collector. In one example embodiment, the negative electrode current collector may be or include a composite substrate CPS described below.

A lithium layer may be formed on the negative electrode current collector after charging of the rechargeable lithium battery. A lithium layer may be formed between the coating layer CTL and the negative electrode current collector. The coating layer CTL may promote a uniform, or substantially uniform, formation of the lithium layer.

Hereinafter, an all-solid-state battery using a solid electrolyte is described as an example of a rechargeable lithium battery including a deposition-type negative electrode.

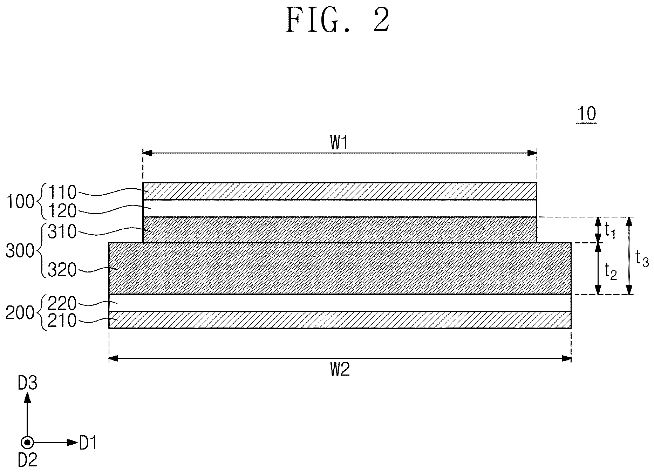

FIG. 2 is a cross-sectional view of an all-solid-state battery according to one example embodiment of the present disclosure. FIG. 3 is a plan view of an all-solid-state battery according to one example embodiment of the present disclosure.

Referring to FIG. 2, an all-solid-state battery 10 according to one example embodiment may include a positive electrode layer 100, a negative electrode layer 200 facing the positive electrode layer 100, and a solid electrolyte layer 300 disposed between the positive electrode layer 110 and the negative electrode layer 200. However, without being limited thereto, the all-solid-state battery 10 may further include an additional functional layer, for example, an adhesion-improving layer, disposed between the positive electrode layer 100 and the solid electrolyte layer 300, or between the negative electrode layer 200 and the solid electrolyte layers 300.

The positive electrode layer 100 of one example embodiment may include a positive electrode current collector 110 and a positive electrode active material layer 120 disposed on the positive electrode current collector 100. Although not illustrated, the positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include, for example, a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

On the other hand, unlike the configuration illustrated in FIG. 2, the positive electrode current collector 110 may be omitted in one example embodiment of the present disclosure. Although not illustrated, a carbon layer having a thickness in a range of about 0.1 µm to about 4 µm may be further disposed between the positive electrode current collector 110 and the positive electrode active material layer 120 in order to increase the binding force between the positive electrode collector 110 and the positive electrode active material layer 120.

The positive electrode active material may include a material capable of reversibly absorbing and desorbing lithium ions. The positive electrode active material may include a plurality of particles. The positive electrode active material may include, for example, but is not necessarily limited to, at least one of lithium transition metal oxides such as lithium cobalt oxide (LCO), lithium nickel oxide, lithium nickel cobalt oxide, lithium nickel-cobalt-aluminum oxide (NCA), lithium nickel-cobalt-manganese oxide (NCM), lithium manganate, and lithium iron phosphate, nickel sulfide, copper sulfide, lithium sulfide, iron oxide, vanadium oxide, or the like. Each of the positive electrode active materials may be alone, or may be or include a mixture of two or more of the above compounds.

The lithium transition metal oxide is or includes, for example, a compound represented by any one of LiₐA_{1-b}B_{b}D₂(0.90≤a≤1, 0≤b≤0.5), LiₐE_{1-b}B_{b}O_{2-c}D_{c}(0.90 ≤ a ≤ 1, 0 ≤ b ≤ 0.5, 0 ≤ c ≤ 0.05), LiE_{2-b}B_{b}O_{4-c}D_{c}(O ≤ b ≤ 0.5, 0 ≤ c ≤ 0.05), LiₐNi_{1-b-c}Co_{b}B_{c}D_{α}(0.90≤a≤1, 0≤b≤0.5, 0≤c≤0.05, 0<α<2), LiₐNi_{1-b-c}Co_{b}B_{c}O_{2-α}F_{α}(0.90≤a≤1, 0≤b≤0.5, 0≤c≤0.05, 0<α<2), LiₐNi_{1-b-c}Mn_{b}B_{c}D_{α}(0.90≤a≤1, 0≤b≤0.5, 0≤c≤0.05, 0< α ≤2), LiₐNi_{1-b-c}Mn_{b}B_{c}O_{2-α}F_{α}(0.90≤a≤1, 0≤b≤0.5, 0≤c≤0.05, 0<α<2), LiₐNi_{b}E_{c}G_{d}O₂(0.90≤a≤1, 0≤b≤0.9, 0≤c≤0.5, 0.001≤d≤0.1), LiₐNi_{b}Co_{c}Mn_{d}GeO₂(0.90≤a≤1, 0≤b≤0.9, 0≤c≤0.5, 0≤d≤0.5, 0.001≤e≤0.1), LiₐNiG_{b}O₂(0.9≤a≤1, 0.001≤b≤0.1), LiₐCoG_{b}O₂(0.90≤a≤1, 0.001≤b≤0.1), LiₐMnG_{b}O₂(0.90≤a≤1, 0.001≤b≤0.1), LiₐMn₂GbO₄(0.90≤a≤1, 0.001≤b≤0.1), QO₂, QS₂, LiQS₂, V₂O₅, LiV₂O₅, LiIO₂, LiNiVO₄, Li_{3-f}J₂(PO₄)₃(0≤f≤2), Li_{3-f}Fe₂(PO₄)₃(0≤f≤2), and LiFePO₄. In such compounds, the capital letter "A" is or includes at least one of Ni, Co, Mn, or a combination thereof, the capital letter "B" is or includes at least one of Al, Ni, Co, Mn, Cr, Fe, Mg, Sr, V, a rare earth element, or a combination thereof, the capital letter "D" is or includes at least one of O, F, S, P, or a combination thereof, the capital letter "E" is or includes at least one of Co, Mn or a combination thereof, the capital letter "F" is or includes at least one of F, S, P or a combination thereof, the capital letter "G" is or includes at least one of Al, Cr, Mn, Fe, Mg, La, Ce, Sr, V or a combination thereof, the capital letter "Q" is or includes at least one of Ti, Mo, Mn or a combination thereof, the capital letter "I" is or includes at least one of Cr, V, Fe, Sc, Y or a combination thereof and the capital letter "J" is or includes at least one of V, Cr, Mn, Co, Ni, Cu or a combination thereof.

The positive electrode active material may include, for example, a lithium salt of a transition metal oxide having a layered rock salt type structure among the lithium transition metal oxides described above. The "layered rock-salt type structure" is, for example, a structure in which oxygen atom layers and metal atom layers are regularly arranged alternately in a <111> direction of a cubic rock salt type structure, whereby each atom layer forms a two-dimensional plane. The "cubic rock salt type structure" refers to a sodium chloride type (NaCl type) structure, which is a type of crystal structure, and refers to a structure in which face centered cubic lattices (fcc) formed by cations and anions are disposed to be shifted from each other by 1/2 of the ridge of a unit lattice. The lithium transition metal oxide having such a layered rock-salt structure may be or include, for example, a ternary lithium transition metal oxide such as LiNiₓCo_{y}Al_{z}O₂ (NCA) or LiNiₓCo_{y}Mn_{z}O₂ (NCM) (0<x<1, 0<y<1, 0<z<1, x+y+z=1). When the positive electrode active material includes a ternary lithium transition metal oxide having a layered rock salt type structure, the energy density of the all-solid-state battery 10 may be increased and the thermal stability may be improved.

The above-described compound contained in the positive electrode active material may be covered with a covering layer (not shown). As the positive electrode active material, it is also possible to use a mixture of the above-described compound and a compound to which a coating layer is added. Meanwhile, the coating layer added to the surface of the positive electrode active material may include, for example, an oxide, a hydroxide, an oxyhydroxide, an oxycarbonate, or a hydroxycarbonate of the following coating element. The compound constituting such a coating layer is amorphous or crystalline. The coating element contained in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO) or the like. The method for forming the coating layer is selected within a range that does not adversely affect the physical properties of the positive electrode active material. Examples of the method for forming the coating layer include a spray coating method and a dipping method.

When the positive electrode active material contains, for example, nickel (Ni) as a ternary lithium transition metal oxide such as NCA or NCM, the capacity density of the all-solid-state battery 10 may be increased, and metal elution from the positive electrode active material in a charged state may be reduced. As a result, cycle characteristics in a charged state of the all-solid-state battery 10 may be improved. On the other hand, the "cycle characteristic" refers to a characteristic indicating a degree of deterioration of the all-solid-state battery 10 due to charging/discharging of the all- solid-state battery 10. For example, the degree of deterioration of an all-solid- state battery 10 due to charge/discharge may be small in an all-solid state battery 10 having a high cycle characteristic, and the degree to which the all-solid state batteries 10 are deteriorated due to charge/discharge may be large in an all- solid state battery 10 having a low cycle characteristic.

The positive electrode active material may have, for example, a particle shape such as a sphere or an ellipsoid. The particle diameter and the content of the positive electrode active material are not particularly limited. In one example embodiment, the positive electrode active material may include, as a polycrystal form, a secondary particle in which at least three or more primary particles are aggregated. In other words, one first particle may include a plurality of primary particles agglomerated with each other. The first particles may have a spherical shape or an elliptical shape.

The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤ 2).

The sulfide-based solid electrolyte may be or include, for example, an argyrodite-type compound including one or more of Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). In particular, the sulfide-based solid electrolyte may be or include an argyrodite-type compound comprising one or more of Li₆PS₅Cl, Li₆PS₅Br, and Li₆PS₅I.

Alternatively, the sulfide-based solid electrolyte may be or include an argyrodite-type compound including Li_{7-a-c}MₐPS_{6-c}X_{c} (0≤a≤2, 0≤c≤2), wherein X may be or include at least one of F, Br, Cl, or a combination thereof. The capital letter "M" may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The density of the argyrodite-type solid electrolyte may be in a range from about 1.5 g/cc to about 2.0 g/cc. Since the argyrodite-type solid electrolyte has a density of about 1.5 g/cc or more, the internal resistance of the all-solid-state battery is reduced, and it may be possible to hinder or prevent the solid electrolyte membrane from penetrating and short-circuiting due to a lithium dendrite formation. The elastic modulus of the solid electrolyte may be, for example, in a range of about 15 GPa to about 35 GPa.

The solid electrolyte in the positive electrode active material layer 120 may have a smaller average particle diameter D50 than the solid electrolyte included in the solid electrolyte layer 300 described below. For example, the average particle diameter (D50) of the solid electrolyte in the positive electrode active material layer 120 may be about 90% or less, about 80% or less, about 70% or less, about 60% or less, about 50% or less, about 40% or less, about 30% or less, or about 20% or less of the average particle diameter (D50) of the solid electrolyte in the solid electrolyte layer 300. For example, the average particle diameter (D50) may be measured using a laser particle size distribution analyzer.

The positive electrode active material layer 120 may include a conductive material. The conductive material may have conductivity without causing a chemical change in the all-solid-state battery 10, thereby increasing the conductivity of the positive electrode active material and the solid electrolyte. The conductive material may include a carbon-based material. The conductive material may include, for example, one or more of graphite, carbon black, acetylene black, carbon nanofibers, and carbon nanotubes.

The positive electrode active material layer 120 may further include a binder. The binder may bind a positive electrode active material, a solid electrolyte, a conductive material, and the like, in the positive electrode active material layer 120 to each other. The binder may include a substance for improving the bonding force between the positive electrode active material layer 120 and the positive electrode current collector 110. The binder may include, for example, at least one of polyvinylidenefluoride, styrene butadiene rubber (SBR), polytetrafluoroethylene, polyvinyridenefluoride, vinylidenefluoride/hexafluoropropylene copolymer, polyacrylonitrile, polymethylmethacrylate, and the like.

The positive electrode active material layer 120 may include about 70 parts by weight or more and about 92 parts by weight or less of the positive electrode active material based on 100 parts by weight of the total of the positive electrode activity material, the solid electrolyte, the conductive material, and the binder. The positive electrode active material layer 120 may include about 0.5 parts by weight or more and about 1.5 parts by weight or less of a binder based on 100 parts by weight of the total of the positive electrode active material, the solid electrolyte, the conductive material, and the binder.

The positive electrode active material layer 120 may include about 1 part by weight or more and about 50 parts by weight or less of the conductive material based on 100 parts by weight of the solid electrolyte in the positive electrode active material layers 120. When the conductive material is contained in the positive electrode active material layer 120 in an amount that is less than about 1 part by weight based on 100 parts by weight of the solid electrolyte in the positive electrode activity material layer 120, the proportion of the conductive material is reduced, so that the electrical conductivity of the positive electrode active materials layer 120 may be lowered. When the conductive material is contained in the positive electrode active material layer 120 in an amount that is more than about 50 parts by weight based on 100 parts by weight of the solid electrolyte in the positive electrode activity material layer 120, the proportion of the conductive material is substantially or excessively high, and a coating layer covering the surface of the solid electrolyte may not be properly formed.

The positive electrode active material layer 120 may further include additives such as at least one of a filler, a coating agent, a dispersant, and an ion conductive auxiliary agent in addition to the positive electrode active material, the solid electrolyte, the conductive material, and the binder described above.

The negative electrode layer 200 may include a negative electrode current collector 210 and a negative electrode coating layer 220 on the negative electrode current collector 210. The negative electrode current collector 210 may provide a reference surface on which the negative electrode coating layer 220 is disposed. The negative electrode current collector 210 may include, for example, a material that does not react with lithium, that is, that does not form both an alloy and a compound with lithium. For example, the negative electrode current collector 210 may include at least one metal such as or including at least one of copper (Cu), stainless steel, titanium (Ti), iron (Fe), cobalt (Co), and nickel (Ni). The thickness of the negative electrode current collector 210 may be in a range of about 1 µm to about 20 µm, for example 5 µm to 15 µm, and for example 7 µm to 10 µm.

The negative electrode current collector 210 may be or include a composite substrate (CPS) described below.

The negative electrode coating layer 220 may allow lithium metal to grow between the negative electrode coating layer 220 and the negative electrode current collector 210 upon charging. The negative electrode coating layer 220 may constitute a protective layer of lithium metal, and may reduce or suppress deposition and growth of lithium dendrite.

The negative electrode coating layer 220 may include a metal and a carbon material. For example, the negative electrode coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon material such as or including at least one of carbon black, acetylene black, furnace black, ketjen black, and graphene. In one example embodiment, the negative electrode coating layer 220 may include a mixture of carbon black and silver (Ag).

The negative electrode coating layer 220 may further include other additives in addition to the metal and carbon. The negative electrode coating layer 220 may further include, for example, at least one additive such as or including at least one of a binder, a filler, a coating agent, a dispersant, and an ion conductive auxiliary.

The negative electrode coating layer 220 may have a smaller thickness than the positive electrode active material layer 120. The thickness of the negative electrode coating layer 220 may be in a range of, for example, 50% or less, 40% or less, 30% or less, 20% or less, 10% or less, or 5% or less of the thickness of the positive electrode active material layer 120. The thickness of the negative electrode coating layer 220 may be, for example, in a range from about 1 µm to about 20 µm, from 2 µm to 10 µm, or from 3 µm to 7 µm. When the thickness of the negative electrode coating layer 220 is too thin, e.g., less than about 1 µm, lithium dendrites formed between the negative electrode coating layer 220 and the negative electrode current collector 210 may collapse the negative electrode coating layer 220, resulting in poor cycle characteristics of the all-solid-state battery 10. When the thickness of the negative electrode coating layer 220 is too thick, e.g., greater than about 20 µm, the energy density of the all-solid-state battery 10 may decrease, and the internal resistance of the all- solid-state battery 10 due to the negative electrode coating layer 220 may increase, resulting in a decrease in the cycle characteristics of the all-solid-state battery 10.

Although not shown, a carbon layer for improving adhesion may be further included between the negative electrode coating layer 220 and the solid electrolyte layer 300.

The solid electrolyte layer 300 may be provided between the positive electrode layer 100 and the negative electrode layer 200. The solid electrolyte layer 300 may include a sulfide-based solid electrolyte having desired or improved lithium ion conductivity characteristics. The solid electrolyte in the solid electrolyte layer 300 may be the same as, or different from, any one of the materials included in the solid electrolyte in the positive electrode active material layer 120 described above.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to a negative electrode layer 200.

The second solid electrolyte layer 320 may be in direct contact with the negative electrode coating layer 220. Thus, the second solid electrolyte layer 320 may reduce or suppress lithium dendrites formed between the negative electrode coating layer 220 and the negative electrode current collector 210. The second solid electrolyte layer 320 may effectively reduce or suppress side reactions on the negative electrode. As a result, the cell performance of the all-solid-state battery 10 according to the present disclosure may be improved.

The solid electrolyte in the solid electrolyte layer 300 may have a particle shape such as a sphere or an ellipsoid.

The solid electrolyte in the solid electrolyte layer 300 may include a sulfide-based solid electrolyte. The solid electrolyte in the solid electrolyte layer 300 may be amorphous, crystalline, or a mixture thereof. In addition, the solid electrolyte may include, for example, at least one of sulfur (S), phosphorus (P), and lithium (Li) as at least constituent elements in the above-described sulfide-based solid electrolyte material. For example, the solid electrolyte may be or include a material comprising Li₂S₋P₂S₅. When a sulfide-based solid electrolyte material containing Li₂S₋P₂S₅ is included to form the solid electrolyte, the mixing molar ratio between Li₂S and P₂S₅, referred to as Li₂S:P₂S₅, is, for example, in the range of about 50:50 to about 90:10.

The sulfide-based solid electrolyte may be or include, for example, an argyrodite-type compound including at least one or more of Li₇₋ₓPS₆₋ₓClₓ(0≤x≤2), Li₇₋ₓPS₆₋ₓBrₓ(0≤x≤2), and Li₇₋ₓPS₆₋ₓIₓ(0≤x≤2). In particular, the sulfide-based solid electrolyte may be or include an argyrodite-type compound comprising at least one or more of Li₆PS₆Cl, Li₆PS₅Br and Li₆PS₅I.

Alternatively, the sulfide-based solid electrolyte may be or include an argyrodite-type compound including Li_{7-a-c}MₐPS_{6-c}X_{c} (0≤a≤2, 0≤c≤2), wherein X may be or include at least one of F, Br, Cl, or a combination thereof, and M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The density of the argyrodite-type solid electrolyte may be in a range from about 1.5 g/cc to about 2.0 g/cc. Since the argyrodite-type solid electrolyte has a density of about 1.5 g/cc or more, the internal resistance of the all-solid-state battery is reduced, and it is possible to hinder or prevent the solid electrolyte membrane from penetrating and short-circuiting due to lithium dendrite formation. The elastic modulus of the solid electrolyte in the solid electrolyte layer 300 is, for example, in a range of about 15 GPa to about 35 GPa.

The solid electrolyte layer 300 may further include a binder. Examples of the binder contained in the solid electrolyte layer 300 may include, but are not limited to, at least one of styrene-butadiene rubber (SBR), polytetrafluoroethylene, polyvinylidene fluoride, or polyethylene. The binder of the solid electrolyte layer 300 may be the same as, or different from, the binder included in the positive electrode active material layer 120 or the binder included the negative electrode coating layer 220.

Referring again to FIG. 2, the first solid electrolyte layer 310 may have a first thickness t₁ and the second solid electrolyte layer 320 may have a second thickness t₂. The solid electrolyte layer 300 may have a third thickness t₃. The first thickness t₁ and the second thickness t₂ may differ from each other. The second thickness t₂ may be greater than the first thickness t₁.

While reducing the thickness of the solid electrolyte layer 300 increases energy density, it also makes it more challenging to reduce or suppress lithium dendrite formation in the negative electrode, and increases the risk of short circuit.

Solid electrolytes may form voids at the interface between the electrode and the electrolyte, which may act as an interfacial resistance, leading to degradation in battery performance.

The interfacial resistance may be lowered by pressing the electrode and the solid electrolyte layer together. In one example embodiment, the sulfide-based solid electrolyte, which has high ionic conductivity and mechanical brittleness, may allow the fabrication of an all-solid-state battery with improved interfacial resistance through pressuring.

In one example embodiment of the present disclosure, a manufacturing process of the positive electrode layer 100 and the negative electrode layer 200 may include a pressuring process. In one example embodiment of the present disclosure, the pressuring process may be performed by applying different pressures to each of the positive electrode layer 100 and the negative electrode layer 200. In one example embodiment of the present disclosure, the positive electrode layer 100 may be manufactured by applying a relatively high pressure compared to the negative electrode layer 200. For example, the application of nanoscale particles to positive electrode active materials may increase the contact area with the solid electrolyte to improve the interfacial resistance. In one example embodiment, the positive electrode active material may include secondary particles in which at least three or more primary particles are aggregated, as a polycrystal form, for reasons such as adhesion to a plate, improvement in capacity characteristics and life characteristics, and the like. In this case, it is observed that the interface resistance between the positive electrode layer 100 and the first solid electrolyte layer 310 is greater than the interface resistance between the negative electrode layer 200 and the second solid electrolyte layer 320, so that the positive electrode laminate may be manufactured by applying a relatively high pressure as compared with the negative electrode laminate. However, it is not limited thereto, and the positive electrode layer 100 and the negative electrode layer 200 may be manufactured through a pressuring process of applying different pressures to each for various reasons.

In one example embodiment of the present disclosure, the solid electrolyte 300 may be divided into the first solid electrolyte layer 310 and the second solid electrolyte layer 320, so that an interfacial resistance between the positive electrode layer 100 and the first solid electrolyte layers 310 may address a process problem that may occur due to different interfacial resistances between the negative electrode layer 200 and the second solid electrolytic layers 320. For example, an all-solid-state battery manufactured according to the method for manufacturing an all-solid-state battery to be described below may provide an all-solid-state battery manufactured by applying different pressures to each of the positive electrode stack and the negative electrode stack.

In one example embodiment of the present disclosure, the solid electrolyte layer 300 may be divided into the first solid electrolyte layer 310 and the second solid electrolyte layer 320, and the thicknesses thereof may be adjusted differently, so that the formation of lithium dendrites in the negative electrode may be reduced or suppressed while the energy density is increased. As a result, it is possible to provide the all-solid-state battery 10 with improved short-circuit risk and stability against impact and high energy density.

A ratio (t₂/t₁) of the second thickness t₂ to the first thickness t₁ may be in range of about 1 to about 20. For example, a ratio (t₂/t₁) of the second thickness t₂ to the first thickness t₁ may be about 2 to about 15, may be about 4 to about 11, and may be about 4.5 to about 5.5. When the ratio (t₂/t₁) of the second thickness t₂ to the first thickness t₁ is within the above-mentioned numerical range, the formation of lithium dendrites in the negative electrode may be reduced or suppressed, and the energy density may be increased, thereby reducing the risk of short circuit and improving impact resistance, while providing the all-solid-state battery 10 with high energy density.

The first thickness t₁ may be less than or equal to about 30 µm. For example, the first thickness t₁ may be about 25 µm or less, may be about 20 µm or less, may be about 14 µm or less, or may be about 10 µm or less. The first thickness t₁ may be greater than or equal to about 0.1 µm. For example, the first thickness t₁ may be about 1 µm or more, may be about 2 µm or more, may be about 4 µm or more, or may be about 5 µm or more. When the first thickness t₁ exceeds the above-mentioned numerical range of about 25 µm, the energy density of the all-solid-state battery 10 may decrease. When the first thickness t₁ is less than the above-mentioned numerical range of about 1 µm, the first thickness t₁ may be less than the diameter of the active material powder in the positive electrode, so that interface formation may be difficult.

The second thickness t₂ may be greater than or equal to about 30 µm. For example, the second thickness t₂ may be about 35 µm or more, about 40 µm or more, about 45 µm or more, about 50 µm or more, about 55 µm or more, or about 60 µm or more. The second thickness t₂ may be less than or equal to about 120 µm. For example, the second thickness t₂ may be about 90 µm or less, and may be about 60 µm or less. When the second thickness t₂ is less than the above-mentioned numerical range of about 120 µm, it may be difficult to reduce or suppress the formation of lithium dendrites in the negative electrode, and short circuit may occur. When the second thickness t₂ exceeds the above-mentioned numerical range of about 30 µm, the energy density of the all-solid-state battery 10 may decrease.

The third thickness t₃ may be less than or equal to about 120 µm. For example, the third thickness t₃ may be 90 µm or less, and may be 60 µm or less. The third thickness t₃ may be greater than or equal to 10 µm. For example, the third thickness t₃ may be about 30 µm or more, and may be about 50 µm or more. When the third thickness t₃ exceeds the above numerical range of about 120 µm, the energy density of the all-solid-state battery 10 may decrease.

Referring to FIGS. 2 and 3, the area of the anode layer 100 and the area of the negative electrode layer 200 may be different from each other. For example, the area of the cathode layer 200 may be larger than the area of the anode layer 100. The anode layer 100 may fully overlap within the cathode layer 200.

In one example embodiment of the present disclosure, the first solid electrolyte layer 310 may have substantially the same area as the positive electrode layer 100. The second solid electrolyte layer 320 may have substantially the same area as the negative electrode layer 200.

Referring to FIGS. 2 and 3, the first solid electrolyte layer 310 may have a first width W1 in the first direction D1. The second solid electrolyte layer 320 may have a second width W2 in the first direction D1. The first width W1 may be smaller than the second width W2.

The difference between the second width W2 and the first width W1 may be less than or equal to about 10 mm. For example, the difference between the second width W2 and the first width W1 may be about 8 mm or less, may be about 5 mm or less, or may be about 3 mm or less. The difference between the second width W2 and the first width W1 may be about 0.1 mm or more, may be about 0.5 mm or more, or may be about 1 mm or more. When the difference between the second width W2 and the first width W1 is above the above numerical range, the size of the positive electrode layer 100 is relatively small, so that the discharge capacity is low, and the energy density of the all-solid-state battery 10 may be reduced. When the difference between the second width W2 and the first width W1 is less than the above numerical range, it may be difficult to reduce or suppress the formation of lithium dendrites in the negative electrode, and short circuiting may occur.

The ratio W2/W1 of the second width W2 to the first width W1 may be between about 1 and about 1.6. For example, a ratio (W2/W1) of the second width W2 to the first width W1 may be in a range of about 1 to about 1.5, may be about 1 to about 1.4, may be about 1 to about 1.3, may be about 1 to about 1.2, or may be about 1 to about 1.1.

When the ratio (W2/W1) of the second width W2 to the first width W1 exceeds the above numerical range, the energy density of the all-solid-state battery 10 may be reduced.

Referring to FIGS. 2 and 3, the first solid electrolyte layer 310 may have a third width W3 in the second direction D2. The second solid electrolyte layer 320 may have a fourth width W4 in the second direction D2. The third width W3 may be less than the fourth width W4.

The difference between the third width W3 and the fourth width W4 may be less than or equal to about 10 mm. For example, the difference between the third width W3 and the fourth width W4 may be about 8 mm or less, may be about 5 mm or less, or may be about 3 mm or less. The difference between the fourth width W4 and the third width W3 may be at least about 0.1 mm, may be at least 0.5 mm, or may be at least 1 mm. When the difference between the third width W3 and the fourth width W4 is above the above numerical range, the size of the positive electrode layer 100 is relatively small, so that the discharge capacity is low, and the energy density of the all-solid-state battery 10 may be reduced. When the difference between the third width W3 and the fourth width W4 is less than the above numerical range, it is difficult to reduce or suppress the formation of lithium dendrites in the negative electrode, and short circuit may occur.

A ratio W4/W3 of the fourth width W4 to the third width W3 may be between about 1 and about 1.6. For example, a ratio (W4/W3) of the fourth width W4 to the third width W3 may be about 1 to about 1.5, may be about 1 to about 1.4, may be about 1 to about 1.3, may be about 1 to about 1.2, or may be about 1 to about 1.1.

When the ratio (W4/W3) of the fourth width W4 to the third width W3 exceeds the above numerical range, the energy density of the all-solid-state battery 10 is reduced.

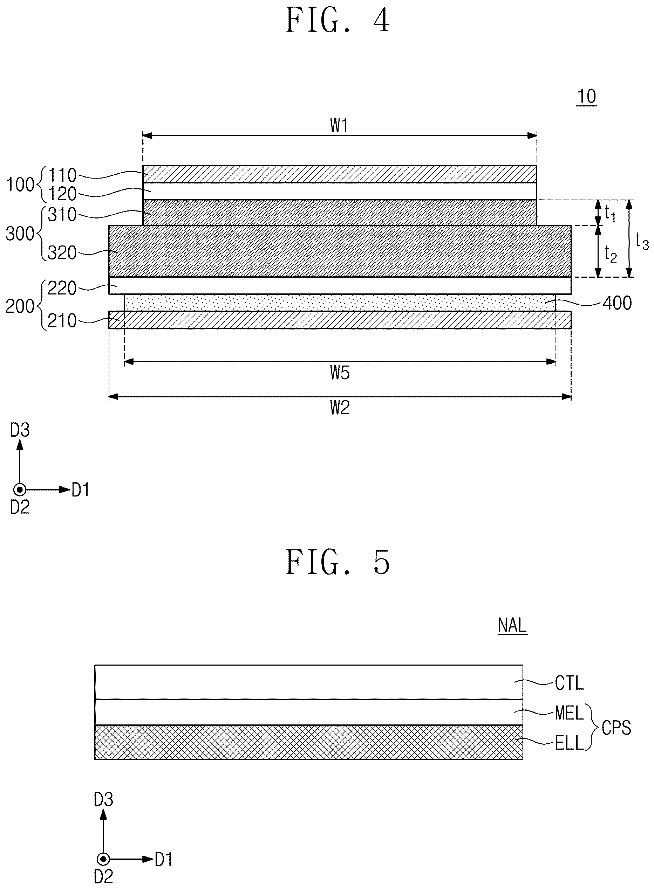

FIG. 4 is a cross-sectional view for illustrating an all-solid-state battery according to another example embodiment of the present disclosure. In the present example embodiment, a detailed description of technical features that overlap with those described above with reference to FIG. 2 and FIG. 3 is omitted, and the differences therefrom are described in detail.

Referring to FIG. 4, the negative electrode layer 200 of the all-solid-state battery 10 may further include a lithium metal layer 400 between the negative electrode current collector 210 and the negative electrode coating layer 220. The thickness of the lithium metal layer 400 may further increase upon charging of the all-solid-state battery 10. The negative electrode coating layer 220 constitutes a protective layer of the lithium metal layer 400, and may also inhibit the growth of lithium dendrites from the lithium metal layer 400.

The lithium metal layer 400 may be or include a thin metal film including lithium or a lithium alloy. Examples of the lithium alloy include, but are not limited to, Li-Al alloy, Li-Sn alloy, Li-In alloy, Li-Ag alloy, Li-Au alloy, Li-Zn alloy, Li-Ge alloy, Li-Si alloy, or any lithium alloy may be used as long as the alloy is a lithium alloy. The lithium metal layer 400 may include lithium or one of these alloys. Alternatively, the lithium metal layer 400 may include various types of alloys.

The lithium metal layer 400 may have a fifth width W5 in the first direction D1. The fifth width W5 may be equal to or greater than the first width W1. The fifth width W5 may be equal to or less than the second width W2. As an example, the fifth width W5 may be greater than the first width W1 and less than the second width W2.

Hereinafter, a composite substrate for a deposition-type negative electrode, a negative electrode including the composite substrate, and a rechargeable lithium battery including the composite substrate according to an example embodiment of the present disclosure is described.

FIG. 5 is a cross-sectional view for describing a deposition-type negative electrode according to an example embodiment.

Referring to FIG. 5, the deposition-type negative electrode NAL may include a composite substrate CPS, and a coating layer CTL on the composite substrate CPS.

The coating layer CTL may be configured to promote a uniform, or substantially uniform, formation of the lithium layer formed on the composite substrate CPS. A lithium layer may be formed between the coating layer CTL and the composite substrate CPS.

In one example embodiment, the coating layer CTL may be the negative electrode coating layer 220 described above with reference to FIG. 2. That is, the coating layer CTL may include a metal and a carbon material.

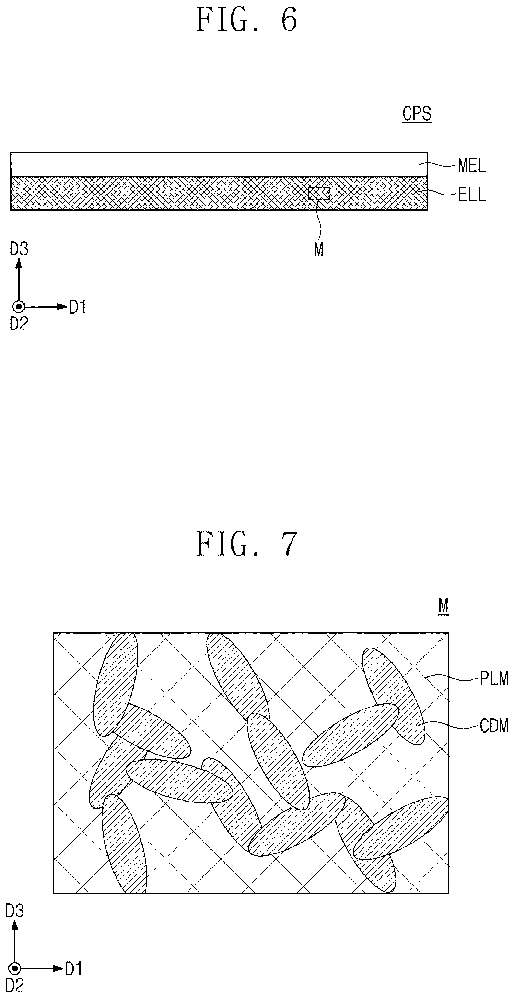

FIG. 6 is a cross-sectional view for describing a composite substrate according to an example embodiment. FIG. 7 is an enlarged view of region "M" of FIG. 6 for illustrating the elastic layer.

Referring to FIG. 6, the composite substrate CPS may include an elastic layer ELL and a metal layer MEL on the elastic layer ELL.

The elastic layer ELL may absorb a volume change (expansion) of the rechargeable lithium battery due to charging and discharging. For example, the elastic layer ELL may reduce or prevent damage to the electrolyte by alleviating stress caused by a change in thickness during charging and discharging.

Referring to FIG. 6 and FIG. 7, the elastic layer ELL may include a polymer foam PLM and a carbon-based conductive material CDM.

The polymer foam PLM may be a porous structure comprising a polymer and a plurality of pores, and may alleviate the thickness variation of a rechargeable lithium battery including a deposition-type negative electrode.

In one example embodiment, the elastic layer ELL may have an average slope of a stress-displacement curve of about 100 MPa or less at a displacement corresponding to 80% of an initial thickness at a temperature of 25 °C. As an example, under a temperature condition of 25°C, an average slope of a stress-displacement curve at a displacement corresponding to about 80% of an initial thickness may be less than or equal to about 50 MPa, and an average slope of the stress-displacement curve at a displacement equivalent to about 50% of the initial thickness may be greater than or equal to about 10 MPa. By having an elastic modulus in the above range, the thickness changes due to lithium deposition may be effectively alleviated.

The properties of the elastic layer (ELL), such as the stress-displacement curve and the average slope thereof, may be determined by the following measurement method, although any conventional compression test method known in the art may be used as long as it provides objective and reproducible results.
a) Measurement Standard and Equipment: The compression stress-strain characteristics of the elastic layer (ELL) are measured in accordance with ISO 3386-1 (or ASTM D3574). A Universal Testing Machine (UTM) equipped with a precision load cell (e.g., 10 N or less) is used to ensure accurate load control and data acquisition.
b) Sample Preparation: Specimens are prepared by isolating the elastic layer (ELL) from the composite substrate (CPS) or by fabricating a separate specimen having the same composition and structure as the elastic layer. Each specimen is cut into a square shape of 10 mm x 10 mm (or a circular shape with a diameter of 10 mm). Prior to measurement, the specimens are conditioned for at least 24 hours in a climate-controlled environment at a temperature of 25 ± 2 °C and a relative humidity of 50 ± 5 °C.
c) Measurement Conditions: The specimen is placed horizontally between the compression plates of the UTM. Compression is applied at a constant cross-head speed of 1.0 mm/min. Stress values are continuously recorded as a function of displacement until the displacement reaches 80% of the initial thickness (T0) of the specimen at a temperature of 25°C.
d) Data Processing and Calculation of Average Slope: The average slope of the stress-displacement curve is defined as the change in stress (ΔStress) divided by the change in displacement (ΔDisplacement) between the initial contact point (0% displacement) and the point corresponding to 80% (or 50%) of the initial thickness. The measurement is repeated for at least five specimens, and the arithmetic mean of the values, excluding the maximum and minimum results, is taken as the final measured value.

In one example embodiment, the elastic layer ELL may include at least one of a polyurethane-based resin, a polyolefin-based resin, a silicone-based resin, and a thermoplastic elastomer as a material of the polymer foam PLM.

The polyurethane-based resin may be or include a homopolymer or copolymer including urethane groups. As an example, the urethane group may be derived from a polyether-based polyol, a polyester-based polyol or a polycarbonate-based polyol.

The polyolefin-based resin may be or include a homopolymer of polyethylene or polypropylene or a copolymer thereof.

The silicone-based resin may be or include a homopolymer or copolymer including siloxane groups. As an example, the silicone-based resin may include at least one of polydimethylsiloxane (PDMS), polymethylphenylsiloxane, and polydiphenylsiloxane.

In one example, the thermoplastic elastomer may include a vulcanized rubber.

The carbon-based conductive material may electrically connect the metal layer MEL and the elastic layer ELL by forming a conductive path in the elastic layer EL. This configuration makes it possible to electrically connect the composite substrate CPS with the external electrode via the elastic layer ELL.

In one example embodiment, the carbon-based conductive material CDM may include at least one of graphite, carbon nanotubes, graphene, and carbon fibers.

In one example embodiment, the content of the carbon-based conductive material CDM in the elastic layer ELL may be in a range of about 10 wt % to about 60 wt %. As an example, the content of the carbon-based conductive material CDM in the elastic layer ELL may be about 10 wt% to about 50 wt%, or about 30 wt% to about 50 wt%. In the above range of the content of the conductive material CDM, the electrical conductivity of the elastic layer ELL may be improved.

In an example, the carbon-based conductive material CDM may include carbon nanotubes CNTs. The carbon nanotubes may include at least one of single-walled carbon nanotubes MWCNT, multi-walled carbon nanoparticles MWCNT, and few-walled carbon Nanotubes TWCNT.

In one example embodiment, the specific surface area of the carbon nanotubes may be in a range of about 300 m²/g to about 1600 m²/g. For example, the specific surface area of the carbon nanotubes may be in a range from about 400 m²/g to about 1500 m²/g, from about 400 m²/g to about 1200 m²/g, or from about 500 m²/g to about 800 m²/g.

In one example embodiment, the aspect ratio of the carbon nanotubes may be in a range between about 10 and about 3,000. For example, the aspect ratio of the carbon nanotubes may be from about 10 to about 2500, from about 20 to about 2000, or from about 30 to about 1500. The aspect ratio of carbon nanotubes may be calculated as the ratio of the length to the diameter of the carbon nanotubes.

In one example embodiment, the average length of the carbon nanotubes may be in a range of about 1 µm to about 1,000 µm. For example, the average length of the carbon nanotubes may be about 10 µm to about 800 µm, about 10 µm to about 500 µm, about 20 µm to about 200 µm, or about 20 µm to about 100 µm.

In one example embodiment, the average diameter of the carbon nanotubes may be in a range of about 2 nm to about 10 nm. For example, the average diameter of the carbon nanotubes may be from about 2 nm to about 8 nm, or from about 4 nm to about 6 nm.

When the elastic layer ELL includes the above-described carbon-based conductive material CDM, desired or improved electrical conductivity may be achieved. In one example embodiment, the electrical conductivity of the elastic layer ELL may be in a range of about 1.0×10⁻¹ S/cm to about 1.0×10² S/cm. By having an electrical conductivity within the above range, the elastic layer ELL may enable low-resistance electrical connection between the metal layer MEL and an external system through a tab region, which is described below.

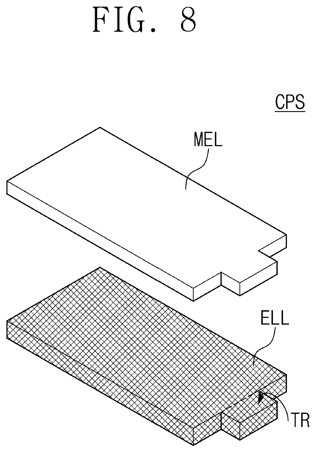

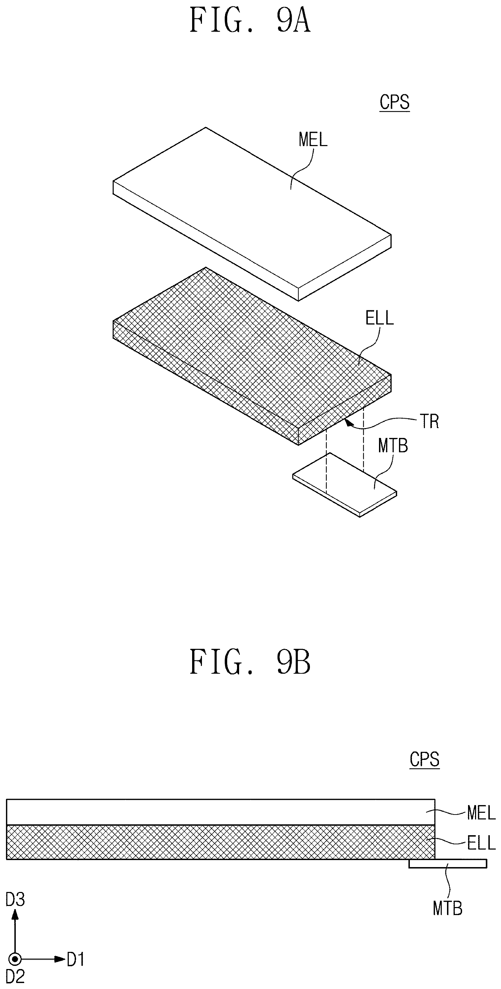

FIG. 8 is an exploded perspective view for illustrating a composite substrate according to an example embodiment. FIG. 9A is an exploded perspective view for illustrating a composite substrate according to another example embodiment. FIG. 9B is a cross-sectional view of the composite substrate of FIG. 9A.

Referring to FIG. 8, FIG. 9A, and FIG. 9B, in one example embodiment, the elastic layer ELL may include a tab region TR formed at one end thereof. The composite substrate CPS may be electrically connected to an external system via the tab region TR. The external system may utilize a rechargeable lithium battery incorporating the composite substrate CPS to perform energy storage, delivery, or control functions. In one example, the external system may be or include an external power supply, a load device, an external device, or the like.

Referring to FIG. 8, in one example embodiment, the tab area TR may be formed to protrude in one direction. The method for forming the tab region TR is not particularly limited, and as one example, the tab region TR may be formed by integrally notching the metal layer MEL and the elastic layer ELL of the composite substrate CPS.

In one example embodiment, the composite substrate CPS may further include a metal tab MTB. The metal tab MTB may be attached to the tab region TR of the elastic layer ELL. The metal tab MTB may be electrically connected with the tab region TR. That is, the metal tab MTB may electrically connect the composite substrate CPS with an external system via the elastic layer ELL.

As one example, the metal tab MTB may include at least one metal such as or including at least one of copper (Cu), stainless steel, titanium (Ti), iron (Fe), cobalt (Co) and nickel (Ni).

Referring again to FIG. 6, in one example embodiment, the metal layer MEL of the composite substrate CPS may include at least one of copper (Cu), stainless steel, titanium (Ti), iron (Fe), cobalt (Co), nickel (Ni), aluminum (Al), or alloys thereof.

In one example embodiment, the ratio of the thickness of the metal layer MEL to the total thickness of the composite substrate CPS may be in a range between about 0.05 and about 0.2. By having the above thickness range, the energy density of the rechargeable lithium battery including the composite substrate may be improved while ensuring the structural stability of the composite substrate.

As one example, the thickness of the metal layer MEL may be in a range between about 0.1 µm and about 10 µm.

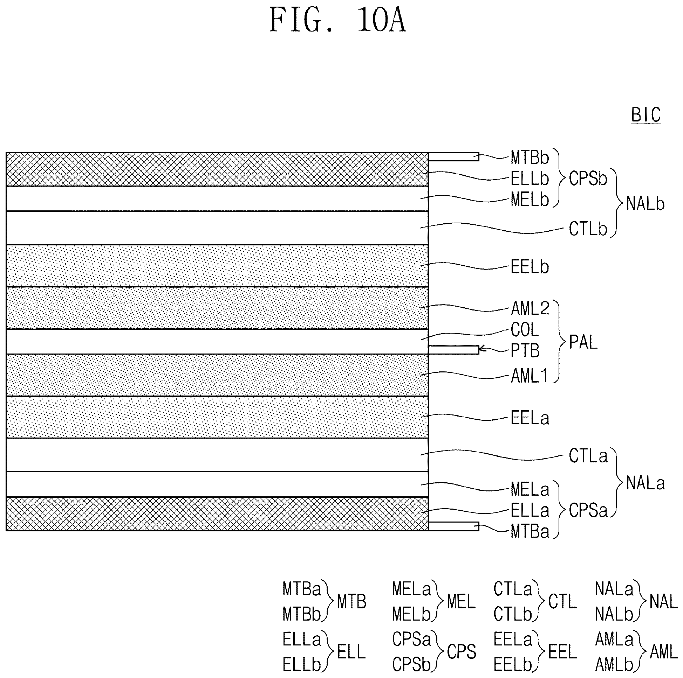

FIG. 10A is a cross-sectional view for illustrating a unit cell of a rechargeable lithium battery according to one example embodiment. Referring to FIG. 10A, in one example embodiment, the unit cell may be in the form of a bi-cell BIC. As one example, the bi-cell BIC may have a configuration in which negative electrode layers NALa and NALb are respectively disposed on both surfaces of the positive electrode layer PAL. For example, the bi-cell BIC may include a positive electrode layer PAL, a first electrolyte layer EELa on a lower surface of the positive electrode layer PAL, a first negative electrode layer NALa on the lower surface of the first electrolyte layer EELa, a second electrolyte layer EELb on the upper surface of the positive electrode layer PAL, and a second negative electrode layer NALb on the upper surface of the second electrolyte layer ELLb.

The positive electrode layer PAL may include a positive electrode current collector COL, a first positive electrode active material layer AML1 on one surface of the positive electrode current collector COL, and a second positive electrode active material layers AML2 on the other surface of the positive electrode current collector. The positive electrode current collector COL may be the same as the positive electrode current collector COL described above with reference to FIG. 1. Each of the first and second positive electrode active material layers AML1 and AML2 may be the same as the positive electrode active material layer AML described above with reference to FIG. 1. Each of the first and second negative electrode layers NALa and NALb may be any one of the negative electrodes NAL described above with reference to FIG. 1 to FIG. 9B. For example, the first negative electrode layer NALa may include a first composite substrate CPSa and a first coating layer CTLa on one surface of the first composite substrate CPSa. The first composite substrate CPSa may include a first elastic layer ELLa and a first metal layer MELa. The first elastic layer ELLa may further include a first metal tab MTBa. The second negative electrode layer NALb may include a second composite substrate CPSb and a second coating layer CTLb on one surface of the second composite substrate CPSb. The second composite substrate CPSb may include a second elastic layer ELLb and a second metal layer MELb. The second elastic layer ELLb may further include a second metal tab MTBb. Each of the first and second composite substrates CPSa and CPSb may be any one of the composite substrates CPS described above with reference to FIGS. 1 to 9B. Each of the first and second electrolyte layers EELa and EELb may be the same as the electrolyte layer EEL described above with reference to FIG. 1.

The elastic layers ELLa and ELLb of the first and second negative electrode layers NALa and NALb may absorb a volume change (expansion) of the rechargeable lithium battery due to charging and discharging. Therefore, an additional elastic member may not be necessary.

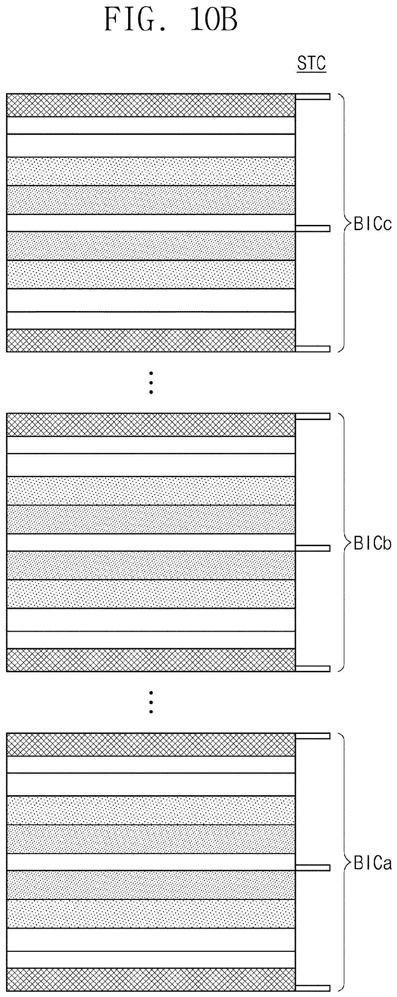

FIG. 10B is a cross-sectional view for illustrating a rechargeable lithium battery in the form of a stacked cell according to one example embodiment. Referring to FIG. 10B, the stacked cell STC may include a plurality of the bi-cells BIC described above with reference to FIG. 10A. For example, the stacked cell STC may include a first bi-cell BICa, a second bi-cell BICb on the first bi-cell BICa, and a third bi-cell BICc on the second bi-cell BICb. Each of the first to third bi-cells BICa, BICb, and BICc may absorb a volume change (expansion) of the rechargeable lithium battery due to charging and discharging by including the above-described elastic layers. Therefore, an additional elastic member may not be necessary.

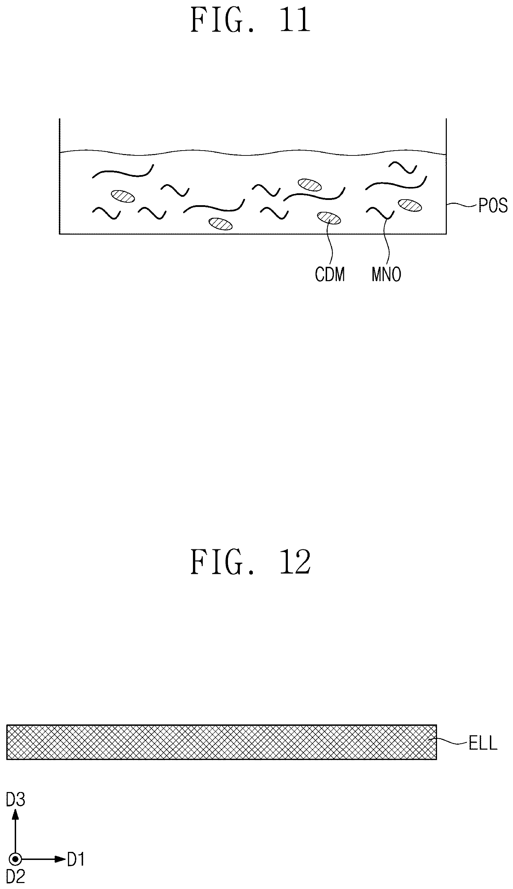

Hereinafter, a method for manufacturing a composite substrate according to example embodiments of the present disclosure is described. FIG. 11 to FIG. 14 are cross-sectional views illustrating a method of manufacturing a composite substrate, according to one example embodiment.

Referring to FIG. 11, a polymer solution POS may be prepared in order to manufacture an elastic layer ELL. The polymer solution POS may include a polymer precursor. In one example, the polymer precursor may include at least one of a monomer for synthesizing a polymer MNO and a prepolymer.

In one example embodiment, the monomer MNO may include at least one of a monomer for a polyurethane-based resin, a monomer for a polyolefin-based resin, a monomer for a silicone-based resin, and a monomer for a thermoplastic elastomer.

In one example embodiment, the prepolymer may include at least one of a polyurethane-based resin, a prepolymer for a polyolefin-based resin, a prepolymer for a silicone-based resin, and a prepolymer for a thermoplastic elastomer. In one example, the polymer solution POS may include a prepolymer of at least one of a polyether-based polyol, a polyester-based polyol and a polycarbonate-based polyol.

In one example embodiment, the polymer solution POS may further include a crosslinking agent. As one example, the crosslinking agent may include at least one of an isocyanate, a peroxide, and a silane crosslinking agent. The peroxide may be or include, for example, dicumyl peroxide DCP or benzoyl peroxide BPO. The silane crosslinking agent may be of include, for example, methyltriethoxysilane MTES or vinyltriethoxysilane VTES.

In one example embodiment, the polymer solution POS may further include a polymerization initiator. In one example, the polymerization initiator may include at least one of a thermal polymerization initiator or a photopolymerization initiator.

In one example embodiment, the polymer solution POS may further include a blowing agent. In one example, the blowing agent may include at least one of water, carbon dioxide, nitrogen, and an azo-based blowing agent.

In one example embodiment, the polymer solution POS may further include a carbon-based conductive material CDM.

In one example embodiment, the carbon-based conductive material CDM may include at least one of graphite, carbon nanotubes, graphene, and carbon fibers.

The carbon-based conductive material CDM may be uniformly, or substantially uniformly, distributed in the polymer foam produced by adding the carbon-based conductive material CDM together with the polymer solution POS. This may improve the electronic conductivity of the composite substrate.

The materials in the polymer solution POS may be reacted to form the elastic layer ELL.

Although not shown, the elastic layer ELL of the composite substrate CPS according to example embodiments of the present disclosure may be manufactured by an injection molding method. For example, at least one of a polyurethane-based resin, a polyolefin-based resin, a silicone-based resin, and a thermoplastic elastomer together with a blowing agent and a carbon-based conductive material may be introduced into an injection machine and injection-molded. As a result, an elastic layer ELL may be formed.

In one example embodiment, the carbon-based conductive material may include at least one of graphite, carbon nanotubes, graphene, and carbon fibers. As one example, the carbon-based conductive material may include at least one of carbon nanotubes and graphene. Carbon nanotubes and graphene have desired or improved thermal stability and electron conductivity.

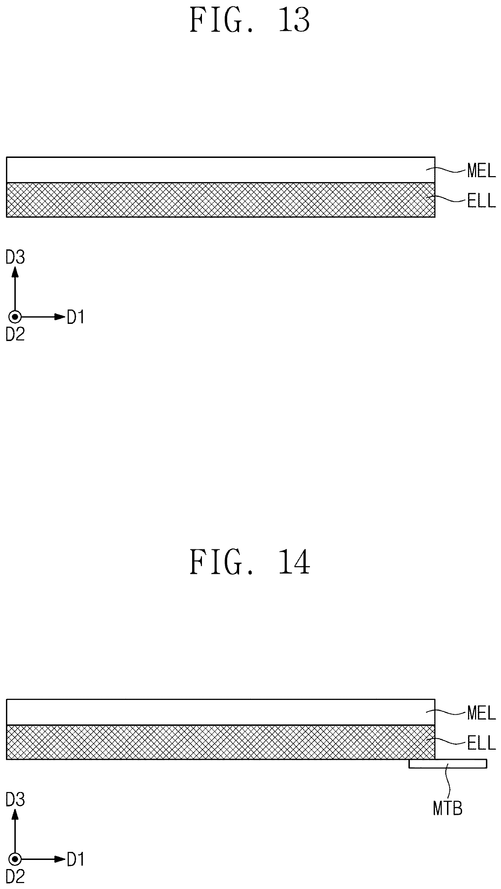

Referring to FIG. 12 and FIG. 13, the composite substrate CPS may be prepared by forming the metal layer MEL on one surface of the elastic layer ELL. As one example, the metal layer MEL may be formed by vaporizing a metal on one surface of the elastic layer ELL. The metal layer MEL may be formed on one surface of the elastic layer ELL through physical vapor deposition or chemical vapor deposition.

Referring to FIG. 14, a metal tab MTB may be formed at one end of the elastic layer ELL.

In one example embodiment, the metal tab MTB may be attached to the tab region TR of the elastic layer ELL described above with reference to FIG. 8 and FIG. 9A. In one example, the metal tab MTB may be attached to the tab region TR using an adhesive composition including a binder and a conductive material. The binder may include the positive electrode binder or negative electrode binder described above. The adhesive composition may include the carbon-based conductive material described above.

Hereinafter, Examples and Comparative Examples of the present disclosure are described. However, the following examples are merely examples of the present disclosure, and the present disclosure is not limited to the following examples.

### Example 1

### Composite Substrate

A thin-walled carbon nanotube (TWCNT) having a wall thickness of about 1.0 nm, a specific surface area of 600 m² /g, and an aspect ratio of about 120 was used as a carbon-based conductive material.

A thermoplastic polyurethane (BASF, 1185A10FHF) and a carbon-based conductive material were injected into an injection molding machine at a weight ratio of 9:1, and nitrogen gas was used as a blowing agent to produce an elastic layer ELL with a thickness of about 50 µm.

Thereafter, a copper thin film was vapor-deposited on the upper surface of the elastic layer ELL to form a metal layer with a thickness of 8 µm. That is, the composite substrate with a total thickness of about 58 µm was prepared.

### Deposition-Type Negative electrode

A coating layer slurry was prepared by mixing carbon black (CB) having a primary particle diameter of about 30 nm and silver (Ag) particles having an average particle diameter D50 of about 60 nm in water at a weight ratio of 3:1. The coating layer slurry was applied onto the metal layer of the composite substrate prepared as the above and dried to form a coating layer CTL with a thickness of about 7 µm. That is, a deposition-type negative electrode was prepared, the negative electrode including a composite substrate CPS and the coating layer CTL on the composite substrate CPS.

### Positive Electrode

A positive electrode slurry was prepared by mixing 98.5% by weight of a lithium cobalt-based oxide (LiCoO₂, LCO) large particles with an average particle diameter of about 12 µm, 1.0% by weight of a PVDF binder, and 0.5% by weight of a conductive material (carbon nanotubes) in an N-methylpyrrolidone solvent. The positive electrode slurry was applied to an aluminum current collector, dried, and roll pressed to prepare a positive electrode. The positive electrode slurry was applied onto a current collector to have a loading level of about 20 g/cm². The rolling was performed using a rolling mill so that the total thickness of the current collector and the positive electrode active material layer AML1 was about 62.5 µm.

### Solid Electrolyte Membrane

Polytetrafluoroethylene (PTFE) and polyvinylidene fluoride (PVDF) were mixed with Li₆PS₅Cl sulfide-based solid electrolyte (D50 = 3 µm, crystalline), which has an argyrodite-type crystal structure, to prepare a mixture. The mixture was stirred to prepare a dough, and then the prepared dough was passed through a roller to form a sheet. The thickness of the solid electrolyte membrane was about 70 µm.

### Rechargeable lithium battery Including Deposition-Type Negative Electrode

The above-prepared deposition-type negative electrode, solid electrolyte membrane, and positive electrode were sequentially stacked and then plate-pressed at a pressure of 500 MPa to prepare a rechargeable lithium battery.

### Example 2

A negative electrode, a positive electrode, a solid electrolyte membrane, and a rechargeable lithium battery were produced in the same manner as in Example 1, with a difference that in the production of the elastic layer, a thermoplastic polyurethane (BASF, 1185A10FHF) and a carbon-based conductive material were mixed at a weight ratio of 7:3.

### Example 3

A negative electrode, a positive electrode, a solid electrolyte membrane, and a rechargeable lithium battery were produced in the same manner as in Example 1, with a difference that in the production of the elastic layer, a thermoplastic polyurethane (BASF, 1185A10FHF) and a carbon-based conductive material were mixed at a weight ratio of 5:5.

### Example 4

A negative electrode, a positive electrode, a solid electrolyte membrane, and a rechargeable lithium battery were produced in the same manner as in Example 1, with a difference that in the production of the elastic layer, a thermoplastic polyurethane (BASF, 1185A10FHF) and a carbon-based conductive material were mixed at a weight ratio of 4:6.

### Comparative Example 1

A negative electrode, a positive electrode, a solid electrolyte membrane, and a rechargeable lithium battery were produced in the same manner as in Example 1, with a difference that poly(3,4-ethylenedioxythiophene):poly(styrenesulfonate) (PEDOT:PSS), which is a conductive polymer, was used as a conductive material instead of the carbon-based conductive material in the production of the elastic layer.

### Evaluation Example 1: DC-IR Measurement

The DC-IR of the rechargeable lithium batteries (all-solid-state batteries) prepared according to Examples 1 to 4 and Comparative Example 1 was measured. A voltage drop (V) was measured by applying an additional current of 0.1 C for 1 second at a state of charge (SOC) of 80% (i.e., a state in which the battery is charged to 80% of its total capacity, or, equivalently, a state corresponding to 80% discharge when viewed from a discharge perspective). Based on these results, the DC-IR was calculated and shown in Table 1 below.

### Evaluation Example 2: Life Evaluation

The rechargeable lithium batteries (all-solid-state batteries) prepared according to Examples 1 to 4 and Comparative Example 1 were placed in a test module and fixed with a force of 5000 gf. The batteries were then charged at 45°C to cutoff voltage of 4.25 V with a constant current of 0.1 C, followed by discharge at 0.1 C to a final voltage of 2.5 V to perform initial charging and discharging. The batteries subjected to the initial charge and discharge were repeatedly charged and discharged at 0.33 C in a voltage range of 2.5 V to 4.25 V at 45°C. The number of cycles at which the discharge capacity ratio to the initial discharge capacity fell to less than 80% was defined as the cycle life. The results are shown in Table 1 below.

**Table 1**

| Classification | DC-IR (mΩ) | Cycle life |
|---|---|---|
| Example 1 | 52 | 872 |
| Example 2 | 61 | 831 |
| Example 3 | 68 | 785 |
| Example 4 | 102 | 792 |
| Comparative Example 1 | 513 | 770 |

Referring to Table 1, it can be seen that the rechargeable lithium battery according to the examples includes a carbon-based conductive material (TWCNT) as a conductive material in the elastic layer of the composite substrate, thereby exhibiting low internal resistance and desired or improved cycle life.

A rechargeable lithium battery including a deposition-type negative electrode undergoes volume changes during charging and discharging. The composite substrate according to the present disclosure may reduce such volume changes by including an elastic layer. In addition, unlike a conventional substrate composed only of metal, the composite substrate may have a lower density due to the inclusion of the elastic layer, thereby improving the energy density of the battery. Furthermore, since the composite substrate further includes a conductive material, a decrease in electrical conductivity caused by the introduction of the elastic layer may be reduced or prevented. The rechargeable lithium battery according to the present disclosure is desired or improved in electrical conductivity and cycle characteristics by including the composite substrate.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described example embodiments should be regarded as examples rather than limitations of the present disclosure.

## Claims

1. A composite substrate for a deposition-type negative electrode, the composite substrate comprising:
an elastic layer; and
a metal layer on the elastic layer,
wherein the elastic layer comprises a polymer foam and a carbon-based conductive material.

2. The composite substrate as claimed in claim 1, wherein the polymer foam comprises at least one of a polyurethane-based resin, a polyolefin-based resin, silicone-based resin, and thermoplastic elastomer.

3. The composite substrate as claimed in claim 1 or claim 2, wherein the carbon-based conductive material comprises at least one of graphite, carbon nanotubes, graphene, and carbon fibers.

4. The composite substrate as claimed in any one of claims 1 to 3, wherein a content of the carbon-based conductive material in the elastic layer is a range of about 10 wt% to about 60 wt%.

5. The composite substrate as claimed in any one of claims 1 to 4, wherein a ratio of a thickness of the metal layer to a total thickness of the composite substrate is in a range of about 0.05 to about 0.2.

6. The composite substrate as claimed in any one of claims 1 to 5, wherein an electrical conductivity of the elastic layer is a range of about 1.0×10⁻¹ S/cm to about 1.0×10² S/cm.

7. The composite substrate as claimed in any one of claims 1 to 6, further comprising a metal tab attached to the elastic layer,
wherein the elastic layer electrically connects the metal layer to an external system connected to the metal tab.

8. The composite substrate as claimed in claim 7, wherein the elastic layer comprises a tab region at one end thereof, and
wherein the metal tab is attached to the tab region.

9. The composite substrate as claimed in any one of claims 1 to 8, wherein the elastic layer has an average slope of a stress-displacement curve of 100 MPa or less at a displacement corresponding to 80% of an initial thickness at a temperature of 25 °C.

10. A deposition-type negative electrode comprising:
a composite substrate according to any one of claims 1 to 9; and
a coating layer on the composite substrate.

11. The deposition-type negative electrode as claimed in claim 10, wherein the coating layer comprises:
a metal comprising at least one of gold (Au), platinum (Pt), palladium (Pd), silicon (Si), silver (Ag), aluminum (Al), bismuth (Bi), tin (Sn), and zinc (Zn); and
a carbon material comprising at least one of carbon black, acetylene black, furnace black, ketjen black, and graphene.

12. A rechargeable lithium battery comprising:
a positive electrode layer;
a deposition-type negative electrode layer; and
an electrolyte layer between the positive electrode layer and the deposition-type negative electrode layer,
wherein the deposition-type negative electrode layer comprises a composite substrate according to any one of claims 1 to 9.

13. The rechargeable lithium battery as claimed in claim 12, wherein the electrolyte layer comprises a sulfide-based solid electrolyte.
